# NEUE EUROPÄISCHE PATENTSCHRIFT

(11) **EP 2 624 587 B2**
(45) Veröffentlichungstag und Bekanntmachung des Hinweises auf die Entscheidung über den Einspruch: **29.09.2021**
(45) Hinweis auf die Patenterteilung: 10.10.2018
(21) Anmeldenummer: 13000300.7
(22) Anmeldetag: 22.01.2013
(51) Int. Cl.: H04Q 9/00

(54) **Funkmodul, insbesondere Erfassungseinrichtung zum Ermitteln und Übermitteln von Verbrauchsdaten**
Radio module, in particular a detection device for the detection and communication of consumption data
Module radio, en particulier dispositif de saisie destiné à déterminer et transmettre des données de consommation

(30) Priorität: 31.01.2012 DE 102012001772
(43) Veröffentlichungstag der Anmeldung: 07.08.2013
(73) Patentinhaber: Diehl Metering Systems GmbH, 90451 Nürnberg (DE)
(72) Erfinder: Schmidt, Markus, 90522 Oberasbach (DE); Gottschalk, Roland, 90530 Wendelstein (DE); Becke, Gerhard, 91301 Forchheim (DE); Gottschalk, Klaus, 90610 Winkelhaid (DE)
(74) Vertreter: Diehl Patentabteilung

(56) Entgegenhaltungen:
- EP-A2- 2 025 445
- WO-A2-2006/055478
- DE-A1-102004 055 659
- DE-A1-102004 055 659
- DE-A1-102009 028 794
- US-A1- 2004 174 270
- FINKENZELLER: 'GRUNDLAGEN UND PRAKTISCHE ANWENDUNGEN VON TRAPONDERN' Seiten 138 - 139
- "Kommunikationssysteme für Zähler und deren Fernablesung -Teil 4: Zählerauslesung über Funk (Fernblesung von Zählern im SRD-Band)", Europäische Norm EN 13757-4, pages 1-4,

## Beschreibung

Die Erfindung betrifft ein Funkmodul, insbesondere eine Erfassungseinrichtung, wie sie etwa unter der Handelsbezeichnung IZAR-Funkmodul der Anmelderin am Markt ist. Sie ist dafür ausgelegt, von Verbrauchs-Messgeräten wie Gas-, Wasser oder Stromzählern deren Gerätenummern und deren aktuellen Verbrauchsdaten kontaktlos aufzunehmen und nach Datenvorverarbeitung und Zwischenspeicherung über Kurzstreckenfunk an einen stationär oder mobil betriebenen Empfänger zu übertragen, von dem aus dann gewöhnlich noch eine abschließende Übermittlung an eine zentrale Auswertestation erfolgt.

Die Messgeräte können schon herstellerseitig, oder aber auch erst nach deren Einbau an den Messorten, mit den Erfassungseinrichtungen ausgestattet werden. Letztere sind jedenfalls vor ihrer ersten Inbetriebnahme, etwa hinsichtlich Bauart, Sendespezifikation und Datenverschlüsselung, zu konfigurieren beziehungsweise zu parametrisieren. Um das auch nach der Fertigstellung der Erfassungseinrichtung und selbst erst vor Ort zu ermöglichen, ist in das hermetisch geschlossene Gehäuse der Erfassungseinrichtung ein infrarotdurchlässiges Fenster eingeschweißt, hinter dem auf einer Leiterplatte der Erfassungseinrichtung eine IR-Diode als Sende-Empfangs-Schnittstelle betrieben wird. Damit schon während der Fertigung, also insbesondere während der Bestückung der Leiterplatte, Typ- und Testinformationen (so genannte Way-of-Life-Datensätze) zu ihrer Individualisierung auf der Leiterplatte abgespeichert werden können, ist sie bis zur Einhäusung z. B. über einen Service-Stecker mit einer IR-Diode bestückt. Diese Schnittstelle kann allerdings entweder nur über eine externe Energieversorgung (externe Spannungsversorgung, Batterie o. ä.) benutzt werden, oder erst nachdem die Leiterplatte im Zuge der Fertigung auch mit einer Batterie für die Betriebsenergie ausgestattet worden ist, was in der Fertigungspraxis erst nach weitgehender Schaltungskomplettierung und somit erst zu einem relativ späten Produktionszeitpunkt erfolgen kann. Zeitlich davor gelegene Informationen etwa über individuelle Bestückungsvarianten und über Ergebnisse von Zwischenfunktionstests können deshalb in den abgespeicherten Way-of-Life-Datensätzen so nicht erfasst werden.

Aus der DE 10 2004 055 659 A1 ist eine Verbrauchsdaten-Erfassungsvorrichtung mit einem RFID-Transponder bekannt, über den entweder die Verbrauchsdaten ausgelesen werden können oder die Aussendung der Verbrauchsdaten über einen ISM-Band-Sender veranlasst werden kann.

In der US 2004/0174270 A1 wird ein mobiles Verbrauchszähler-Fernauslesesystem beschrieben, bei welchem die Zählerinformation mittels SMS-Nachrichten über ein Mobilkommunikationssystem übertragen werden.

Die WO 2006/055478 A2 beschreibt, dass bei der Produktion von Leiterplatten RFID-Tags vorgesehen sein können, in welche bereits während der Produktion Konfigurationsdaten oder Testergebnisse eingespeichert werden können.

Der Erfindung liegt die technische Problemstellung zugrunde, ein Funkmodul gattungsgemäßer Art derart weiterzubilden, dass seine drahtlose Schnittstelle erweitert nutzbar ist.

Diese Aufgabe ist erfindungsgemäß durch die im Hauptanspruch angegebenen wesentlichen Merkmale gelöst. Danach wird bei dem Funkmodul - und damit auf dessen Leiterplatte - statt einer batteriebetriebenen oder extern energieversorgten Infrarot- nun eine autarke Hochfrequenz-Schnittstelle realisiert. Für deren Betrieb bedarf es weder eines Teststeckers während der Leiterplattenbestückung, noch des Einbaues eines Fensters ins Kunststoffgehäuse der Erfassungseinrichtung, und auch nicht der Ausstattung mit einer Batterie oder dergleichen internen oder externen Energiequelle. Vielmehr wird die Leiterplatte schon in einer sehr frühen Phase ihrer Bauelementenbestückung, praktisch gleich zu Beginn, auch mit einem miniaturisierten Schnittstellen-Bauelement, mit Anten- ne und nichtflüchtigem Speicher (eventuell auch mit Richtleiter), bestückt. Dabei können die einzelnen Bestandteile des Schnittstellen-Bauelements direkt auf der Leiterplatte des Funkmoduls bestückt werden; sie können aber auch auf einer eigenen Leiterplatte bestückt ein separates Modul bilden, welches wiederum auf der Funkmodul-Leiterplatte bestückt wird. Außerdem können sie zumindest teilweise als integriertes Bauteil ausgeführt sein.

Dieses Schnittstellen-Bauelement, das insbesondere als so genannter RFID-Transponder kommerziell verfügbar ist, ist in seiner Funktionsweise insofern autark, als es seine Betriebsenergie aus dem eingestrahlten Hochfrequenzfeld bezieht, mittels des-sen Modulation sein Speicher einbeschrieben und ausgelesen wird. So kann der Way-of-Life der individuellen Leiterplatte von Anbeginn ihrer Bestückung an, also unabhängig von der Bereitstellung einer Energieversorgung, und über die Ergebnisse aller ihrer aufeinanderfolgenden Funktionstests sowie über den gebrauchsfertigen Einbau in ein hochfrequenzdurchlässiges Kunststoff-Spritzgussgehäuse hinweg bis hin zum Produktle-bensende mittels sporadischer Hochfrequenzaktivierung ihres Schnittstellen-Bauelemen-tes verfolgt, dokumentiert und bedarfsweise, etwa für Parametrisierungs- und Konfigurationszwecke, ausgelesen werden.

Für eine Vorverarbeitung der Nutzdaten, insbesondere der Verbrauchsdaten, für deren Zwischenspeicherung und deren Funkübermittlung ist die Leiterplatte des Funkmoduls mit einem Prozessor ausgestattet. An dessen Bus angeschlossen oder auch im Prozessor selbst integriert ist zweckmäßigerweise auch der Speicher des Schnittstellen-Bauelementes, um über die Schnittstelle Konfigurations- und Parametrisierungsinforma-tionen unmittelbar in den Prozessor übergeben zu können, oder auch um vom Prozessor abgefragt und/oder beschrieben werden zu können.

Andererseits ist es erfindungsgemäß vorgesehen, funktionswichtige aktuelle Informationen wie Funktions- und Nutzdaten (insbesondere also Verbrauchsdaten) aus dem Prozessor in den nichtflüchtigen Speicher einzuspeisen und darin entweder in gewissem Rhythmus zyklisch zu überschreiben oder alternativ kumuliert abzuspeichern, um auch die zeitliche Entwicklung, also die Historie der Daten festzuhalten. Damit können die Daten auch dann noch wenigstens behelfsweise (nämlich nun über diese autarke Funk-Schnittstelle) ausgelesen werden, wenn etwa der Datensender des Funkmoduls (bzw. der Erfassungseinrichtung) mangels Betriebsenergie aus einer nach vielen Betriebsjahren plötzlich erschöpften Batterie ausgefallen ist. Für die dafür im Schnittstellen-Bauelement erforderliche erhöhte Speicherkapazität wird dessen internem Speicher zweck mäßigerweise ein nichtflüchtiger externer Speicher zugeschaltet oder auf den internen Speicher gleich ganz verzichtet.

Aus Kostengründen kann es darüber hinaus vorteilhaft sein, auf eine interne Antenne im
Schnittstellen-Bauelement oder auch eine separat bestückte Antenne zu verzichten und
stattdessen eine insbesondere induktiv oder kapazitiv arbeitende Leiterbahnen-Antenne
auf der Leiterplatte auszubilden.

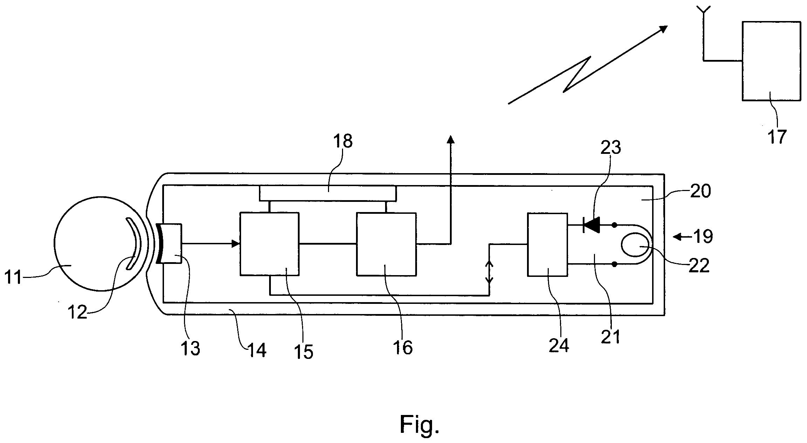

Zusätzliche Alternativen und Weiterbildungen der Erfindung ergeben sich aus den weiteren Ansprüchen und, auch hinsichtlich deren Vorteilen, aus nachstehender Beschreibung eines bevorzugten Ausführungsbeispiels zur Erfindung. In der einzigen Figur der Zeichnung ist nach Art eines auf das Funktionswesentliche abstrahierten Blockschaltbildes die schaltungsmäßige Ausstattung eines als Erfassungseinrichtung ausgeführten Funkmoduls skizziert.

Im dargestellten Beispielsfalle ist ein mechanisch arbeitendes Einspeise- oder Entnahme-Messgerät 11 für Verbrauchsdaten mit einem Inkremental- oder Absolut-Encoder 12 ausgestattet (natürlich ist die Erfindung auch zur Verwendung mit einem elektronischen Messgerät mit entsprechenden Schnittstellen zur Übertragung der Messdaten geeignet). Der Inkremental- oder Absolut-Encoder 12 liefert drahtlos, insbesondere induktiv, etwa drehwinkel- oder drehzahlabhängige Messwerte über eingespeiste beziehungsweise entnommene Volumina wie Strom-, Gas- oder Wassermengen und außerdem wenigstens eine Identifikation (etwa Fabriknummer) des Messgerätes 11 an einen Decoder 13 einer Erfassungseinrichtung 14, mit welcher das Messgerät 11 bestückt ist. Die dekodierten Verbrauchsdaten werden mittels eines Prozessors 15 insbesondere dahingehend aufbereitet und zwischengespeichert, dass sie periodisch über einen Sender 16 an einen mobil oder stationär im Nahbereich betriebenen Empfänger 17 übermittelt werden können. Eine auf sehr lange Lebens- und Betriebsdauer ausgelegte Batterie 18 liefert die für die Erfassungseinrichtung 14 erforderliche Betriebsenergie.

Um die Erfassungseinrichtung 14 messgerätespezifisch parametrisieren und betriebsspezifisch konfigurieren zu können, ist sie mit einer Hochfrequenz-Schnittstelle 19 versehen, über die eine externe Einflussnahme auf Betriebsfunktionen der Erfassungseinrichtung 14 möglich ist. Dafür ist die Leiterplatte 20 für die Schaltungen der Erfassungseinrichtung 14 mit einem passiven, also von einer lokalen Energiequelle unabhängig arbeitenden Schnittstellen-Bauelement 21 bestückt. Dieses weist eine induktive Antenne 22 auf, die integriert - oder als Leiterbahn auf der Leiterplatte 20 ausgebildet oder separat auf der Leiterplatte 20 bestückt - sein kann. Aus eingestrahlter Hochfrequenzenergie wird über die Antenne 22 und einen impedanzangepassten Leiter (sowie einen insbesondere bei hohen Frequenzen vorgesehenen Richtleiter 23) die Betriebsenergie für das Auslesen oder Beschreiben eines nichtflüchtigen Speichers 24 gewonnen. Die Frequenz kann im Radio-Langwellenbereich liegen, im Interesse höherer Zeitschlitzdifferenzierungen und Übertragungsdatenraten sind jedoch Kurzwellen-Frequenzen (insbesondere im Frequenzbereich um 13,56 oder 865 MHz) zu bevorzugen. Im einfachsten Falle führt das Bitmuster der im Speicher 24 hinterlegten Information zu einem entsprechenden Dämpfungsrhythmus im Hochfrequenzfeld und kann so über die Schnittstelle 19 ausgelesen werden. Falls für das Schnittstellen-Bauelement 21 zusätzlich noch ein Energiezwischenspeicher vorgesehen ist, der die aus dem Hochfrequenzfeld gewonnene Energie zumindest kurzzeitig puffern kann, ist auch eine aktive Rückübertragung über die Schnittstelle 19 möglich. Umgekehrt kann z. B. mittels Amplitudenmodulation (aber natürlich auch mittels Frequenz- oder Phasenmodulation) ein Bitmuster über die Schnittstelle 19 in den Speicher 24 eingeprägt werden.

Als derartiges Hochfrequenz-Schnittstellenbauelement kann ein kommerziell verfügbarer RFID-Transponder Anwendung finden. Dessen nichtflüchtiger Speicher wird im Interesse größeren Speichervolumens und niedrigerer Betriebsspannung vorzugsweise durch einen externen Speicher 24 in EEPROM- bzw. Flash-EEPROM- oder FRAM-Technologie ergänzt oder gleich ganz ersetzt. Auch kann die integrierte magnetische oder kapazitive Antenne durch die preiswertere Ausführung einer Leiterbahn auf der Leiterplatte 20 ersetzt werden.

Über die erfindungsgemäß realisierte autarke induktive Hochfrequenz-Schnittstelle 19 des Schnittstellen-Bauelementes 21 können also im Zuge der Bestückung der Leiterplatte 20 von Anbeginn an Informationen wie Gerätetyp und -abart sowie Testschritte und -ergebnisse eingespeichert werden, um später, etwa für die Inbetriebnahme der Erfassungseinrichtung 14 oder bei Reklamationen, daraus wieder abgerufen werden zu können. Der Speicher 24 ist aber auch an den Prozessor 15 der Erfassungseinrichtung 14 angeschlossen, an den so später, bei deren Inbetriebnahme, über die Hochfrequenz-Schnittstelle 19 Parameter wie Anfangszählerstand, Messwertkodierung und Sendeintervalle vorgegeben werden können. Außerdem kann der nichtflüchtige Speicher 24 einer Datensicherung dienen, indem wesentliche Betriebsdaten wie die Seriennummer des Messgerätes 11 und dessen aktueller Verbrauchsdaten-Zählerstand periodisch vom Prozessor 15 in den Speicher 24 überschrieben werden, um sie - etwa bei Betriebsstörungen infolge nach vielen Betriebsjahren erschöpfter Batterie 18 - behelfsweise auch noch über die autarke Schnittstelle 19 auslesen zu können.

### Bezugszeichenliste

- 11: Messgerät
- 12: Encoder
- 13: Decoder
- 14: Erfassungseinrichtung
- 15: Prozessor
- 16: Sender
- 17: Empfänger
- 18: Batterie
- 19: Schnittstelle
- 20: Leiterplatte
- 21: Schnittstellen-Bauelement
- 22: Antenne
- 23: Richtleiter
- 24: Speicher

## Patentansprüche

1. Funkmodul, das mit einem Prozessor (15) sowie mit Schaltungen zu Dekodierung, Speicherung und Aussendung von Nutzdaten sowie mit einer extern zugänglichen Parametrisierungs- und Konfigurations-Schnittstelle (19) ausgestattet ist und dessen Leiterplatte (20) zusätzlich zu den Schaltungen mit einem an den Prozessor (15) angeschlossenen, als autarke, also von einer Energiequelle unabhängig arbeitenden, Hochfrequenz-Schnittstelle (19) dienenden Schnittstellen-Bauelement (21) mit Antenne (22) und nichtflüchtigem Speicher (24) bestückt ist, in welchen über die Schnittstelle (19) einschreib- sowie auslesbare Betriebs- und Konfigurationsdaten ablegbar sind, **wobei** der Speicher (24) Typen-, Bestückungs- und / oder Prüfinformationen aus dem Produktionsprozess des Funkmoduls enthält, im Speicher (24) auch die aktuellen Nutzdaten abspeicherbar sind, wobei im Speicher (24) die aktuellen Nutzdaten zyklisch überschreibbar sind, und die Nutzdaten sowohl über die Schaltung (16) zur Aussendung von Nutzdaten als auch über die Hochfrequenz-Schnittstelle (19) auslesbar sind.

2. Funkmodul nach Anspruch 1, **dadurch gekennzeichnet, dass** es sich bei den Nutzdaten um Verbrauchsdaten handelt und das Funkmodul eine Erfassungseinrichtung (14) von aus einem Messgerät (11) übernommenen Verbrauchsdaten ist.

3. Funkmodul nach einem der vorangehenden Ansprüche, **dadurch gekennzeichnet, dass** der Speicher (24) die Typen-, Bestückungs- und / oder Prüfinformationen aus dem Produktionsprozess des Funkmoduls von Anbeginn der Bestückung der Leiterplatte (20) an enthält.

4. Funkmodul nach einem der vorangehenden Ansprüche, **dadurch gekennzeichnet, dass** das Schnittstellen-Bauelement (21) drahtlos ansprechbar, insbesondere ein RFID-Transponder ist.

5. Funkmodul nach einem der vorangehenden Ansprüche, **dadurch gekennzeichnet, dass** der Speicher (24) als einzelnes bestücktes Bauelement ausgeführt oder in dem Schnittstellen-Bauelement (21) integriert ist.

6. Funkmodul nach dem vorangehenden Anspruch, **dadurch gekennzeichnet, dass** der Speicher (24) in EPROM- oder FRAM-Technologie erstellt ist.

7. Funkmodul nach einem der vorangehenden Ansprüche, **dadurch gekennzeichnet, dass** die Antenne (22) des Schnittstellen-Bauelements (21) als Leiterbahn auf der Leiterplatte (20) oder als einzelnes bestücktes Bauelement ausgeführt ist.

## Claims

1. Radio module which is equipped with a processor (15) and with circuits for decoding, storing and emitting useful data and with an externally accessible parameterization and configuration interface (19) and the printed circuit board (20) of which is fitted, in addition to the circuits, with an interface component (21) which is connected to the processor (15), is used as an autonomous radio-frequency interface (19), that is to say a radio-frequency interface (19) which operates independently of an energy source, and has an antenna (22) and a non-volatile memory (24) which can store operating and configuration data which can be written in and read out via the interface (19), **wherein** the memory (24) contains type, equipment and/or test information from the production process of the radio module, the memory (24) can also store the current useful data, wherein the current useful data can be cyclically overwritten in the memory (24), and the useful data can be read out both via the circuit (16) for emitting useful data and via the radio-frequency interface (19).

2. Radio module according to Claim 1, **characterized in that** the useful data are consumption data, and the radio module is a device (14) for capturing consumption data adopted from a meter (11).

3. Radio module according to one of the preceding claims, **characterized in that** the memory (24) contains the type, equipment and/or test information from the production process of the radio module from the beginning of the process of fitting the printed circuit board (20) with components.

4. Radio module according to one of the preceding claims, **characterized in that** the interface component (21) can be wirelessly addressed, in particular is an RFID transponder.

5. Radio module according to one of the preceding claims, **characterized in that** the memory (24) is in the form of an individual fitted component or is integrated in the interface component (21).

6. Radio module according to the preceding claim, **characterized in that** the memory (24) is created in EPROM or FRAM technology.

7. Radio module according to one of the preceding claims, **characterized in that** the antenna (22) of the interface component (21) is in the form of a conductor track on the printed circuit board (20) or is in the form of an individual fitted component.

## Revendications

1. Module radioélectrique, qui est équipé d'un processeur (15) ainsi que de circuits servant au décodage, à la mémorisation et à l'envoi de données utiles et aussi d'une interface de paramétrage et de configuration (19) accessible depuis l'extérieur et dont le circuit imprimé (20), en plus des circuits, est équipé d'un composant d'interface (21) raccordé au processeur (15) et servant d'interface à haute fréquence (19) autonome, c'est-à-dire fonctionnant indépendamment d'une source d'énergie, avec une antenne (22) et une mémoire non volatile (24) dans laquelle peuvent être stockées des données de fonctionnement et de configuration qui peuvent être écrites et aussi lues par le biais de l'interface (19),
la mémoire (24) contenant des informations de type, d'équipement et/ou de contrôle issues du processus de production du module radioélectrique, les données utiles actuelles pouvant également être enregistrées dans la mémoire (24) et les données utiles pouvant être lues aussi bien par le biais du circuit (16) servant l'envoi des données utiles que par le biais de l'interface à haute fréquence (19).

2. Module radioélectrique selon la revendication 1, **caractérisé en ce que** les données utiles sont des données d'utilisation et le module radioélectrique est un dispositif d'acquisition (14) de données d'utilisation collectées depuis un appareil de mesure (11).

3. Module radioélectrique selon l'une des revendications précédentes, **caractérisé en ce que** la mémoire (24) contient les informations de type, d'équipement et/ou de contrôle issues du processus de production du module radioélectrique depuis le début de l'implantation du circuit imprimé (20).

4. Module radioélectrique selon l'une des revendications précédentes, **caractérisé en ce que** le composant d'interface (21) peut être sollicité sans fil et **en ce qu'**il est notamment un transpondeur RFID.

5. Module radioélectrique selon l'une des revendications précédentes, **caractérisé en ce que** la mémoire (24) est réalisée sous la forme d'un composant implanté unique ou est intégrée dans le composant d'interface (21).

6. Module radioélectrique selon l'une des revendications précédentes, **caractérisé en ce que** la mémoire (24) est fabriquée en technologie EEPROM ou FRAM.

7. Module radioélectrique selon l'une des revendications précédentes, **caractérisé en ce que** l'antenne (22) du composant d'interface (21) est réalisée sous la forme d'une poste conductrice sur le circuit imprimé (20) ou sous la forme d'un composant implanté unique.
